# FASCICULE DE BREVET EUROPEEN

(11) **EP 0 998 188 B1**
(45) Date de publication et mention de la délivrance du brevet: **21.08.2002**
(21) Numéro de dépôt: 98940338.1
(22) Date de dépôt: 24.07.1998
(51) Int. Cl.: A01G 17/16

(54) **MACHINE POUR PLANTER DES PIQUETS NOTAMMENT DANS LES TERRAINS A VIGNOBLES**
VORRICHTUNG ZUM SETZEN VON PFÄHLEN, INSBESONDERE IN WEINBERGEN
MACHINE FOR PLANTING STAKES IN PARTICULAR IN VINEYARDS

(30) Priorité: 25.07.1997 FR 9709516
(43) Date de publication de la demande: 10.05.2000
(73) Titulaire: CHAMPAGNE MOET & CHANDON, 51200 Epernay (FR)
(72) Inventeur: BELHOMME, Gérard, D-54516 Wittlich (DE); LHOTTE, François, F-51480 Vauciennes (FR); RAIMOND, Régis, F-51190 Avize (FR)
(74) Mandataire: Bentz, Jean-Paul
(86) Numéro de dépôt international: FR9801649
(87) Numéro de publication internationale: WO99004744

(56) Documents cités:
- AU-B- 432 474
- US-A- 3 602 316

## Description

La présente invention a essentiellement pour objet une machine tractée pour planter des piquets ou analogues notamment dans les terrains à vignobles.

De telles machines ont déjà été proposées US-A-3 602 316, mais leur fonctionnement n'était pas toujours satisfaisant et elles n'étaient pas capables, techniquement parlant, de prendre en compte toutes les irrégularités et les pentes du terrain sur lequel les piquets sont à planter. En d'autres termes, les machines connues étaient loin de permettre une correction automatique ou quasi-automatique de la position de la machine en fonction notamment des changements de pente du terrain.

Aussi, la présente invention a pour but de proposer une machine dotée de perfectionnements remarquables lui permettant de corriger sa position en fonction du relief sur lequel elle évolue de telle façon que les piquets plantés aient toujours la verticalité et l'alignement voulus, quelle que soit la forme du terrain.

A cet effet, l'invention a pour objet une machine portée et/ou tractée pour planter des piquets ou analogues suivant des rangées successives, caractérisée en ce qu'elle comprend en combinaison les moyens suivants :
- au moins une ligne d'enfonce-piquets sensiblement verticaux et solidaires d'une poutre horizontale qui porte à l'une de ses extrémités un détecteur photoélectrique de la présence d'un piquet appartenant à une rangée de piquets voisine ;
- un premier chariot monté roulant sur un chassis et sur lequel est montée articulée la ligne d'enfonce-piquets ;
- un bâti sur lequel est monté roulant un deuxième chariot suivant une direction transversale à la direction de déplacement du premier chariot, lequel deuxième chariot porte ledit chassis qui est monté pivotant sur ce deuxième chariot suivant un plan horizontal ; et
- une jambe actionnable par vérins de chaque côté dudit bâti et solidaire d'un support formant essieu de roue pour soulever d'un côté et/ou de l'autre le bâti par rapport à une roue afin de permettre à la machine de corriger sa position sur un terrain en dévers.

La machine selon cette invention est encore caractérisée en ce que la jambe précitée se compose d'une paire de montants verticaux portés par le support de roue et montés coulissants dans un élément tubulaire faisant partie du bâti.

Suivant une autre caractéristique de cette machine, la poutre horizontale précitée est télescopique pour permettre un espacement relatif des enfonce-piquets et est monté articulée sur le premier chariot pour permettre l'inclinaison de la ligne d'enfonce-piquets par rapport à la verticale.

On précisera ici que le chassis est monté pivotant sur le deuxième chariot précité par l'intermédiaire de couronnes à billes.

Selon encore une autre caractéristique de cette machine, le premier et le deuxième chariots comportent des galets de roulement permettant respectivement leurs déplacements sur le chassis et sur le bâti.

La machine de cette invention comporte également un magasin réglable pour les piquets qui est solidaire du bâti au-dessus de chaque roue.

Suivant une autre caractéristique de cette machine, chaque enfonce-piquets comporte en partie supérieure une tête actionnable par un vérin et en partie basse un guide des piquets.

Il faut encore préciser ici que la machine est commandée par un système hydraulique dont les pompes sont solidaires du deuxième chariot.

Selon encore une autre caractéristique de cette machine, le système hydraulique comporte des circuits indépendants pour commander respectivement :
- le mouvement des enfonce-piquets par rapport au premier chariot et l'enfoncement des piquets,
- le déplacement par roulement du premier chariot sur le chassis,
- le pivotement du chassis sur le deuxième chariot,
- le déplacement par roulement du deuxième chariot sur le bâti, et
- l'actionnement des jambes pour corriger le dévers.

La machine selon cette invention peut être guidée suivant une direction perpendiculaire aux rangées successives et parallèles de piquets, par un fil tendu fixé au sol, parcouru par un courant électrique, et coopérant avec des détecteurs inductifs solidaires du chassis et disposés sur l'axe longitudinal médian du chassis.

Mais d'autres caractéristiques et avantages de l'invention apparaîtront mieux dans la description détaillée qui suit et se réfère aux dessins annexés, donnés uniquement à titre d'exemple, et dans lesquels :
- la figure 1 est une vue schématique et de dessus de l'ensemble de la machine selon cette invention ;
- la figure 2 est une vue de côté de la machine suivant la flèche II de la figure 1 ; et
- la figure 3 est une vue arrière de la machine suivant la flèche III de la figure 2.

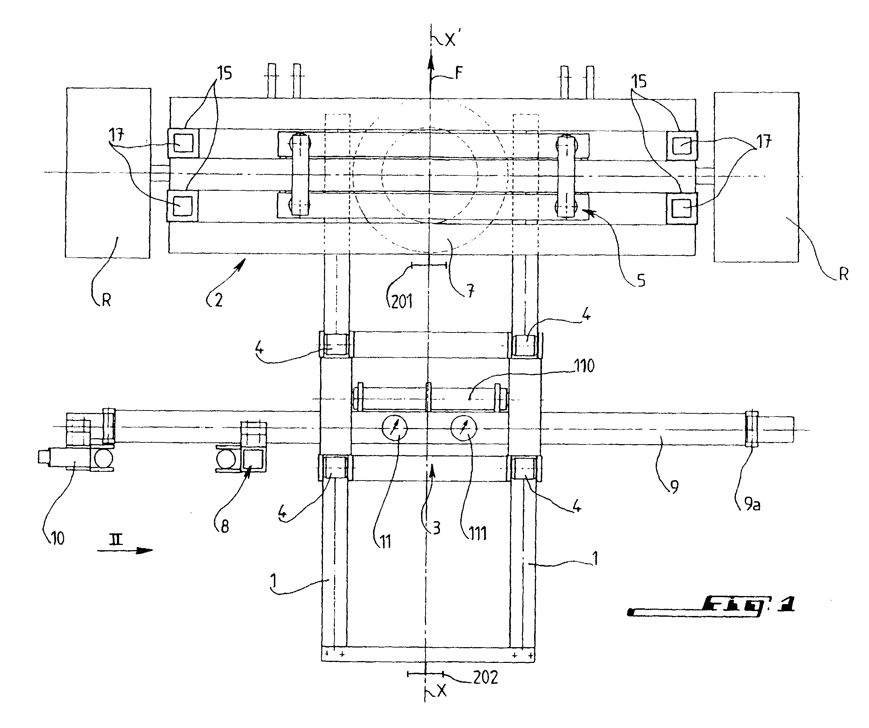

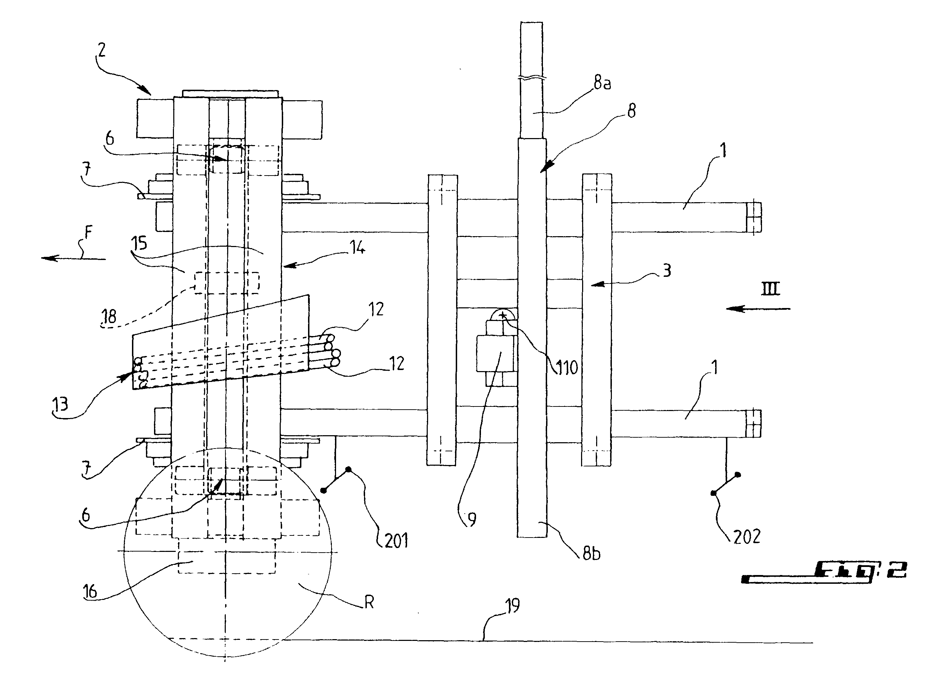

Suivant l'exemple de réalisation représenté sur les dessins, l'infrastructure d'une machine tractée pour planter des piquets selon cette invention, se compose essentiellement d'un chassis mécano-soudé 1 monté horizontalement pivotant sur un bâti 2 présentant la forme générale d'un portique muni latéralement de deux roues R et tracté par un tracteur par exemple (non représenté) suivant le sens de la flèche F visible sur les figures 1 et 2.

Un premier chariot 3 est monté roulant par l'intermédiaire d'une pluralité de galets 4 sur le chassis 1 qui, lui-même, est monté horizontalement pivotant sur un deuxième chariot 5 monté roulant sur le bâti 2 suivant une direction transversale à la direction de déplacement du premier chariot 3 sur le chassis 1. On voit en 6 sur la figure 2 les galets de roulement du deuxième chariot 5 sur le bâti 2.

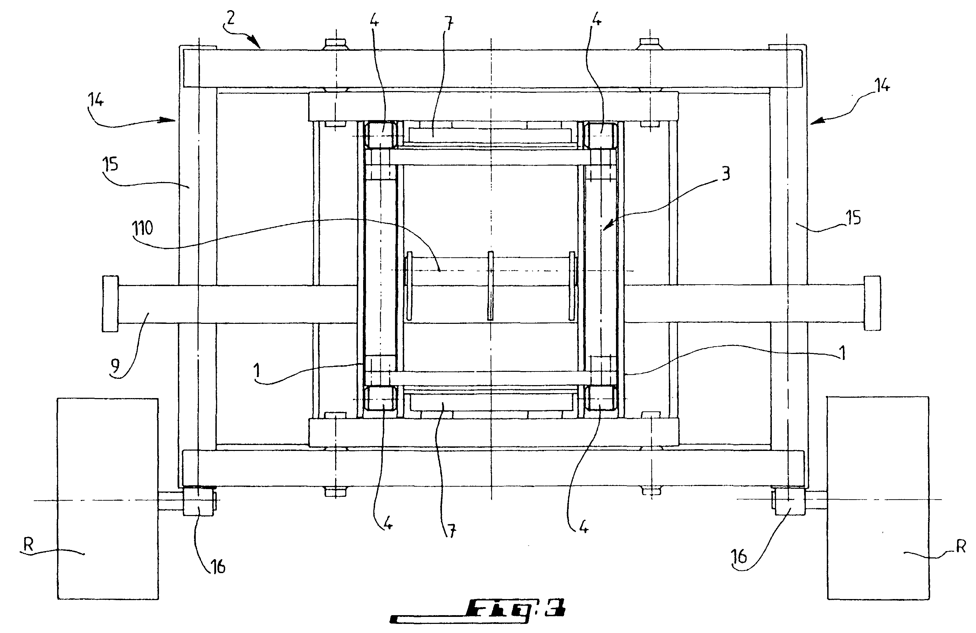

Le chassis 1 est fixé horizontalement pivotant sur le deuxième chariot 5 par l'intermédiaire de deux couronnes à billes bien visibles en 7 sur les figures 1, 2 et 3 et qui sont solidaires du bâti 2.

Une ligne d'enfonce-piquets 8, dont un seul est représenté et visible sur les figures 1 et 2 est prévue sur le premier chariot 3. Plus précisément, les enfonce-piquets 8 sont solidaires d'une poutre horizontale 9 qui porte à l'une de ses extrémités un détecteur photoélectrique 10 (figure 1) permettant de détecter la présence d'un piquet appartenant à une rangée de piquets voisine au fur et à mesure du déplacement de la machine dans le sens de la flèche F. Ainsi, l'alignement entre eux de tous les piquets d'une rangée pourra être respecté.

On précisera ici que la poutre horizontale 9 portant les enfonce-piquets 8 est montée articulée sur le premier chariot 3 roulant sur le chassis 1, de façon à permettre à la ligne d'enfonce-piquets 8 solidaire de cette poutre de prendre une position plus ou moins inclinée par rapport au chassis 1. On a repéré en 110 sur les figures 1, 2 et 3, l'axe autour duquel peut tourner la poutre 9 pour conférer à la ligne d'enfonce-piquets 8 la verticalité voulue avant plantation des piquets en fonction de la pente du terrain sur laquelle évolue la machine. A cet égard, la poutre 9 est munie d'un inclinomètre montré schématiquement en 11 sur la figure 1 et mesurant les mouvements de tangage du chassis 1.

On précisera encore ici que la poutre horizontale 9 supportant les enfonce-piquets verticaux 8 est avantageusement télescopique, comme on le voit en 9a sur la figure 1, de façon à permettre un espacement relatif approprié entre les enfonce-piquets 8 sur cette poutre.

Comme on peut le comprendre en se reportant à la figure 2, chaque enfonce-piquets 8 comporte à sa partie supérieure une tête 8a actionnable par un vérin (non représenté), et en partie basse un canal de guidage 8b des piquets, lesquels piquets sont repérés en 12 sur la figure 2 et peuvent être stockés dans un magasin représenté schématiquement en 13 et fixé sur chaque côté du portique ou bâti 2 au-dessus de chaque roue R.

Plus précisément, le magasin 13 est solidaire d'une jambe verticale 14 formant le côté du bâti 2 de la machine et portant à son extrémité une roue R.

Comme cela est visible sur la figure 1 conjointement avec la figure 2, chaque jambe 14 se compose essentiellement de deux montants verticaux 17 qui sont portés par un support 16 de roue R. Ces montants verticaux 17 sont chacun montés coulissants dans un élément tubulaire 15 qui fait partie de la structure mécano-soudée du bâti 2.

La jambe 14 constituée par deux éléments tubulaires 15 et leurs montants verticaux associés 17 est actionnable par des vérins (non représentés) de chaque côté du bâti 2, de façon à pouvoir soulever d'un côté ou de l'autre ledit bâti par rapport à une roue R afin de permettre ainsi à la machine de corriger sa position sur un terrain en dévers.

A cet effet, un deuxième inclinomètre 111 (figure 1) monté sur la poutre 9, permet de mesurer l'horizontalité de ladite poutre, et donc celle du bâti 2.

La machine selon cette invention est commandée par un système hydraulique comportant un certain nombre de pompes montrées schématiquement en 18 sur la figure 2 et qui sont solidaires du deuxième chariot 5, en étant par exemple situés entre les couronnes à billes 7.

Ce système hydraulique comporte un certain nombre de circuits indépendants (non représentés) pour commander les mouvements ou déplacements relatifs des organes de la machine décrite précisément.

Plus précisément, ces divers circuits commandent respectivement :
- le mouvement de la poutre 9, c'est-à-dire des enfonce-piquets 8, par rapport au premier chariot 3, autour de l'axe 10, et l'enfoncement dans le sol des piquets 12 ;
- le déplacement par roulement du premier chariot 3 sur le chassis 1 ;
- le pivotement du chassis 1 sur le deuxième chariot 5 ;
- le déplacement par roulement de ce deuxième chariot 5 sur le bâti 2, et
- l'actionnement des jambes 14 pour corriger la position de la machine sur un terrain en dévers.

On comprend donc que les combinaisons multiples possibles des mouvements ou déplacements ci-dessus permettent à la machine selon cette invention de s'adapter à toute irrégularité, pente ou dévers du terrain sur lequel elle doit évoluer pour, en toutes circonstances, assurer l'enfoncement d'une rangée de piquets suivant la verticalité requise, et cela toujours en alignement avec les piquets plantés précédemment. En bref, la verticalité de plantation des piquets sera toujours parfaite quel que soit le relief du terrain sur lequel travaille la machine.

On précisera encore que, suivant un mode de fonctionnement préféré, les fils 19 parcourus par un courant électrique, seront installés parallèlement les uns aux autres sur le terrain destiné à recevoir les rangées successives de piquets.

Dès lors, de façon à rechercher un double alignement des rangées de piquets suivant deux directions perpendiculaires, la machine sera guidée par un fil tendu 19, fixé au sol et parcouru par un courant électrique, comme on le voit sur la figure 2. Ce fil coopérera avec une paire de détecteurs inductifs 201 et 202 qui sont solidaires du chassis 1, à l'avant de ce chassis, c'est à dire au niveau de sa liaison pivotante au bâti 2, et également approximativement à l'arrière de celui-ci, comme on le voit bien sur la figure 2. Ainsi, le chassis 1 sera toujours positionné de telle façon que son axe longitudinal médian X-X'soit au dessus de et sensiblement parallèle au fil 19 tendu sur le sol.

La machine pourra donc être guidée suivant une direction perpendiculaire aux rangées successives et parallèles de piquets.

Bien entendu, l'invention n'est nullement limitée au mode de réalisation décrit et illustré qui n'a été donné qu'à titre d'exemple.

C'est ainsi que le guidage longitudinal de la machine peut être réalisé par tout moyen approprié autre qu'un fil, par exemple par guidage au moyen d'un faisceau laser.

C'est ainsi également que le dispositif de détection photoélectrique de repérage des piquets d'une rangée voisine peut être remplacé par un système de visée comprenant une caméra. Dans ce cas,cette caméra peut être reliée soit à un écran installé par exemple dans la cabine du conducteur de la machine, soit à un système d'analyse d'image lui-même relié à la commande de positionnement de la ligne d'enfonce-piquets. L'avantage d'un tel système de visée par caméra par rapport au système de détection photoélectrique, est qu'il est possible de vérifier, et au besoin de corriger, l'alignement des piquets sur les rangées transversales par rapport à la direction d'avance de la machine.Par ailleurs, au lieu des roues R prévues sur le portique, on pourrait utiliser des patins ou analogues, en particulier dans le cas d'un terrain mou, la machine étant alors déplacée par soulèvement et transfert d'une ligne de piquets à l'autre.

## Revendications

1. Machine portée et/ou tractée pour planter des piquets ou analogues suivant des rangées successives, **caractérisée en ce qu'**elle comprend en combinaison les moyens suivants :
- au moins une ligne d'enfonce-piquets (8) sensiblement verticaux et solidaires d'une poutre horizontale (9) qui porte à l'une de ses extrémités un détecteur photoélectrique (10) de la présence d'un piquet appartenant à une rangée de piquets voisine ;
- un premier chariot (3) monté roulant sur un chassis (1) et sur lequel est montée articulée la ligne d'enfonce-piquets ;
- un bâti (2) sur lequel est monté roulant un deuxième chariot (5) suivant une direction transversale à la direction de déplacement du premier chariot (3), lequel deuxième chariot (5) porte ledit chassis (1) qui est monté pivotant sur ce deuxième chariot suivant un plan horizontal ; et
- une jambe (14) actionnable par vérin de chaque côté dudit bâti (2) et solidaire d'un support(16) formant essieu de roue pour soulever d'un côté et/ou de l'autre le bâti (2) par rapport à une roue (R) afin de permettre à la machine de corriger sa position sur un terrain en dévers.

2. Machine selon la revendication 1, **caractérisée en ce que** la jambe précitée (14) se compose d'une paire de montants verticaux (17) portés par le support (16) de roue (R) et montés coulissants dans un élément tubulaire (15) faisant partie du bâti (2).

3. Machine selon la revendication 1, **caractérisée en ce que** la poutre horizontale (9) précitée est télescopique pour permettre un espacement relatif des enfonce-piquets (8) et est montée articulée sur le premier chariot (3), pour permettre l'inclinaison de la ligne d'enfonce-piquets (8) par rapport à la verticale.

4. Machine selon la revendication 1, **caractérisée en ce que** le chassis précité (1) est monté pivotant sur le deuxième chariot précité (5) par l'intermédiaire de couronnes à billes (7).

5. Machine selon l'une des revendications 1 à 4, **caractérisée en ce que** le premier et le deuxième chariots (3, 5) comportent des galets de roulement (4, 6) permettant respectivement leur déplacement sur le chassis (1) et sur le bâti (2).

6. Machine selon l'une des revendications précédentes, **caractérisée par** un magasin (13) pour les piquets (12) qui est solidaire du bâti (2) au dessus de chaque roue (R).

7. Machine selon l'une des revendications précédentes, **caractérisée en ce que** chaque enfonce-piquets (8) comporte en partie supérieure une tête (8a) actionnable par un vérin et en partie basse un guide (8b) des piquets.

8. Machine selon l'une des revendications précédentes, **caractérisée en ce qu'**elle est commandée par un système hydraulique dont les pompes (18) sont solidaires du deuxième chariot (5).

9. Machine selon la revendication 8, **caractérisée en ce que** le système hydraulique comporte des circuits indépendants pour commander respectivement :
- le mouvement des enfonce-piquets (8) par rapport au premier chariot (3) et l'enfoncement des piquets (12),
- le déplacement par roulement du premier chariot (3) sur le chassis (1),
- le pivotement du chassis (1) sur le deuxième chariot (5),
- le déplacement par roulement du deuxième chariot (5) sur le bâti (2), et
- l'actionnement des jambes (14) pour corriger le dévers.

10. Machine selon l'une des revendications précédentes, **caractérisée en ce qu'**elle est guidée suivant une direction perpendiculaire aux rangées successives et parallèles de piquets, par un fil tendu (19) fixé au sol, parcouru par un courant électrique, et coopérant avec des détecteurs inductifs (201,202) solidaires du chassis (1) et disposés sur l'axe longitudinal médian (X-X') du chassis (1).

## Patentansprüche

1. Getragene und / oder gezogene vorrichtung zum Setzen von Pfählen oder dergleichen entlang aufeinander folgenden Reihen, **dadurch gekennzeichnet, dass** sie in Kombination folgende Mittel umfasst:
- wenigstens eine Reihe deutlich vertikaler Pfahleintreiber (8), die mit einem horizontalen Balken fest verbunden sind, der an einem seiner Enden einen fotoelektrischen Detektor (10) für das Vorhandensein eines zu einer benachbarten Pfahlreihe gehörenden Pfahles gehört;
- einen ersten rollend auf einem Rahmen (1) aufgebauten Wagen (3), auf dem artikuliert die Reihe Pfahleintreiber aufgebaut ist;
- ein Tragelement (2), auf dem rollend ein zweiter Wagen (5) gemäß einer zur Verschiebungsrichtung des ersten Wagens (3) querverlaufenden Richtung aufgebaut ist, wobei der zweite Wagen (5) den besagten Rahmen (1) trägt, der schwenkend auf diesem zweiten Wagen gemäß einer horizontalen Ebene aufgebaut ist; und
- ein durch einen Zylinder auf jeder Seite des besagten Tragelements (2) zu betätigendes Bein (14), der fest mit einer Halterung (16) verbunden ist, die eine Radachse bildet, um das Tragelement (2) auf einer Seite und / oder der anderen Seite im Verhältnis zum Rad (R) hochzuheben, um der Vorrichtung die Korrektur ihrer Position auf einem Terrain in Schräglage zu erlauben.

2. vorrichtung gemäß Anspruch 1, **dadurch gekennzeichnet, dass** das vorgenannte Bein (14) aus einem Paar vom Tragelement (16) des Rades (R) getragenen und verschieblich in einem zum Tragelement (2) gehörenden röhrenförmigen Element (15) aufgebauten vertikaler Pfeiler (17) bestcht.

3. Vorrichtung gemäß Anspruch 1, **dadurch gekennzeichnet, dass** der vorgenannte horizontale Balken (9) teleskopisch ist, um einen relativen Raum der Pfahleintreiber (8) zu erlauben und artikuliert auf dem ersten Wagen (3) aufgebaut ist, um die Neigung der Reihe Pfahleintreiber (8) im Verhältnis zur Vertikale zu erlauben.

4. Vorrichtung gemäß Anspruch 1, **dadurch gekennzeichnet, dass** der vorgenannte Rahmen (1) mittels Kugelkränzen (7) schwenkend auf dem vorgenannten zweiten Wagen (5) aufgebaut ist.

5. Vorrichtung gemäß Anspruch 1 bis 4, **dadurch gekennzeichnet, dass** die ersten und zweiten Wagen (3, 5) jeweils ihre Verschiebung auf dem Rahmen (1) und auf dem Tragelement (2) erlaubende Laufrollen (4, 6) umfassen.

6. Vorrichtung gemäß einem der vorgenannten Ansprüche, **gekennzeichnet durch** ein Magazin (13) für die Pfähle (12), das oberhalb jedes Rades (R) fest mit dem Tragelement (2) verbunden ist.

7. Vorrichtung gemäß einem der vorgenannten Ansprüche, **dadurch gekennzeichnet, . dass** jeder Pfahleintreiber (8) im oberen Teil einen durch einen zylinder zu betätigenden Kopf (8a) und im unteren Teil eine Führung (8b) der Pfähle umfasst.

8. Vorrichtung gemäß einem der vorgenannten Ansprüche, **dadurch gekennzeichnet, dass** sie durch ein hydraulisches System gesteuert wird, dessen Pumpen (18) fest mit dem zweiten Wagen (5) verbunden sind.

9. vorrichtung gemäß Anspruch 8, **dadurch gekennzeichnet, dass** das hydraulische System unabhängige Schaltkreise umfasst, um jeweils folgendes zu steuern:
- die Bewegung der Pfahleintreiber (8) im Verhältnis zum ersten Wagen (3) und das Eintreiben der Pfähle (12),
- die Verschiebung des ersten Wagens (3) auf dem Rahmen (1) durch Rollen,
- das Schwenken des Rahmens (1) auf dem zweiten Wagen (5),
- die Verschiebung des zweiten Wagens (5) auf dem Tragelement (2) durch Rollen und
- die Betätigung der Beine (14) zum Korrigieren der Schräglage.

10. Vorrichtung gemäß einem der vorgenannten Ansprüche, **dadurch gekennzeichnet, dass** sie gemäß einer zu den aufeinander folgenden Reihen senkrechten und zu den Pfählen parallelen Richtung durch einen am Boden befestigten gespannten Draht (19) geführt wird, durch den ein elektrischer Strom läuft und der mit den fest mit dem Rahmen (1) verbundenen und auf der medianen Längsachse (X - X') des Rahmens (1) angeordneten Induktivdetektoren (201, 202) zusammenwirkt.

## Claims

1. Carried and/or towed machine for driving in stakes or the like along successive rows, **characterised in that** it includes in combination the following means :
- at least one stake driving-in line (8) approximately vertical and integral with a horizontal girder (9) which bears at one of its extremities a photoelectric detector (10) for detecting the presence of a stake belonging to a row of adjacent stakes ;
- a first carriage (3) mounted rolling on a chassis (1) and on which the stake driving- in line is mounted ;
- a frame (2) on which mounted rolling is a second carriage (5) along a direction transversal to the displacement direction of the first carriage (3), said second carriage (5) bearing said chassis (1) which is mounted pivoting on this second carriage along a horizontal plane, and
- a leg (14) able to be activated via a jack on each side of said frame (2) and integral with a support (16) forming a wheel axle so as to lift up on either side the frame (2) with respect to a wheel ( R ) so as to allow the machine to correct its position on slanting terrain.

2. Machine according to claim 1, **characterised in that** said leg is composed of a pair of vertical uprights (17) borne by the wheel support (R) and mounted sliding inside a tubular element (15) forming part of the frame (2).

3. Machine according to claim 1, **characterised in that** said horizontal girder (9) is telescopic to allow a relative spacing of the stakes driving-in line (8) and is mounted joined onto the first carriage (3) so as to allow slanting of the stakes driven-in line (8) with respect to vertical.

4. Machine according to claim 1, **characterised in that** said chassis (1) is mounted pivoting on said second carriage (5) by means of a ball race (7).

5. Machine according to one of claims 1 to 4, **characterised in that** the first and second carriages (3, 5) comprise runners (4, 6) enabling them to move respectively on the chassis (1) and the frame (2).

6. Machine according to one of the preceding claims, **characterised by** a magazine (13) for the stakes (12) and which is integral with the frame (2) above each wheel ( R ) .

7. Machine according to one of the preceding claims, **characterised in that** each stake driven-in line (8) comprises at its upper portion a head (8a) able to be activated by a jack, and at its lower portion a stake guide (8b).

8. Machine according to one of the preceding claims, **characterised in that** it is controlled by a hydraulic system whose pumps (18) are integral with the second carriage (5).

9. Machine according to claim 8, **characterised in that** the hydraulic system comprises independent circuits to respectively control :
- the movement of the stake driving in line (8) with respect to the first carriage (3) and the driving in of the stakes (12),
- the movement via rolling of the first carriage (3) on the chassis (1),
- the pivoting of the chassis (1) on the second carriage (5),
- the movement via rolling of the second carriage (5) on the frame (2), and
- the activation of the legs (14) so as to correct the inclined position.

10. Machine according to one of the preceding claims, **characterised in that** it is guided along a direction perpendicular to the successive rows and parallel to the stakes by a taut wire (19) fixed on the ground, passed through by an electric current and cooperating with inductive detectors (201, 202) integral with the chassis (1) and placed on the median longitudinal axis (X-X') of the chassis (1).
